# EUROPEAN PATENT APPLICATION

(11) **EP 3 264 823 A1**
(43) Date of publication of application: **03.01.2018**
(21) Application number: 15883136.2
(22) Date of filing: 23.02.2015
(51) Int. Cl.: H04W 40/02, H04W 76/02

(54) **WIRELESS COMMUNICATION SYSTEM, COMMUNICATION APPARATUS, TERMINAL, AND BASE STATION**

(71) Applicant: Fujitsu Limited, Kawasaki-shi, Kanagawa 211-8588 (JP)
(72) Inventor: OHTA, Yoshiaki, Kawasaki-shi Kanagawa 211-8588 (JP); AIKAWA, Shinichiro, Kawasaki-shi Kanagawa 211-8588 (JP); ODE, Takayoshi, Kawasaki-shi Kanagawa 211-8588 (JP); TANAKA, Yoshinori, Kawasaki-shi Kanagawa 211-8588 (JP)
(74) Representative: Haseltine Lake LLP
(86) International application number: PCT/JP2015/055099
(87) International publication number: WO 2016/135838

(57) **Abstract**

A communications apparatus (130) receives a signal in a procedure for each of a first terminal (110A) and a second terminal (110B) as a target terminal to receive a service from a network, the signal requesting establishment of a bearer between the target terminal and the communications apparatus, the signal including information enabling identification of a base station (120) to which the target terminal is connected. The communications apparatus (130) then configures a path used for data transmission and reception between the first terminal (110A) and the second terminal (110B), the path including a case of passing through one or more base stations (120) to which the first terminal (110A) and the second terminal (110B) are connected while bypassing the communications apparatus.

## Description

### TECHNICAL FIELD

The present invention relates to a wireless communications system, a communications apparatus, a terminal, and a base station.

### BACKGROUND ART

Mobile communication such as Long Term Evolution (LTE) and LTE-advanced are conventionally known (for example, refer to Non-Patent Literature 1 to 16). Further, Proximity-based Services (ProSe) (function of direct communication between terminals) enabling direct communication between terminals are being studied.

Enhancements for Infrastructure based data Communication Between Devices (eICBD) are being studied for performing communication between terminals by a shortcut path through a base station, without passing through a packet core network such as an Evolved Packet Core (EPC) or the like.

A general packet radio service (GPRS) tunneling protocol (GTP) is a known protocol applicable to an EPC. Gateways such as, for example, a serving gateway (SGW) and a packet data network gateway (PGW) are included in an EPC.

According to a known technique, transmission packets addressed to a communications counterpart terminal are divided into and are transmitted as first packets that do not pass through a control apparatus that manages communication and second packets that pass through the control apparatus (for example, refer to Patent Document 1).

According to another known technique, when traffic is biased as compared to neighbor wireless base stations, a path from a mobile object of a wireless base station having heavy traffic is extended to a neighbor wireless base station with less traffic through a wireless relay (for example, refer to Patent Document 2).

Patent Document 1: Japanese Laid-Open Patent Publication No. 2012-110035
Patent Document 2: Japanese Laid-Open Patent Publication No. 2000-333257

Non-Patent Literature 1: 3GPP TS36.300 v12.1.0, March 2014
Non-Patent Literature 2: 3GPP TS36.211 v12.1.0, March 2014
Non-Patent Literature 3: 3GPP TS36.212 v12.0.0, December 2013
Non-Patent Literature 4: 3GPP TS36.213 v12.1.0, March 2014
Non-Patent Literature 5: 3GPP TS36.321 v12.0.0, December 2013
Non-Patent Literature 6: 3GPP TS36.322 v11.0.0, September 2012
Non-Patent Literature 7: 3GPP TS36.323 v11.2.0, March 2013
Non-Patent Literature 8: 3GPP TS36.331 v12.0.0, December 2013
Non-Patent Literature 9: 3GPP TS36.413 v12.0.0, December 2013
Non-Patent Literature 10: 3GPP TS36.423 v12.0.0, December 2013
Non-Patent Literature 11: 3GPP TR36.842 v12.0.0, December 2013
Non-Patent Literature 12: 3GPP TR36.843 v12.0.0, March 2014
Non-Patent Literature 13: 3GPP TR22.807 v1.0.0, June 2014
Non-Patent Literature 14: 3GPP TS23.303 v12.0.0, February 2014
Non-Patent Literature 15: 3GPP TS23.401 v12.4.0, March 2014
Non-Patent Literature 16: 3GPP TS29.274 v13.0.0, December 2014

### DISCLOSURE OF INVENTION

### PROBLEM TO BE SOLVED BY THE INVENTION

However, with the conventional techniques, when communication between terminals is performed by a shortcut path that is shortened and shortcut at a terminal-side device by a PGW, for example, a network-side device may not be able to efficiently obtain correspondence information concerning the terminal and the base station for configuring a shortcut communication path. For this reason, the network-side device may not be able to efficiently perform control for configuring a shortcut communication path.

In one aspect, an object of the present invention is to provide a wireless communications system, a communications apparatus, a terminal, and a base station capable of efficiently performing control for configuring a shortcut communication path.

### MEANS FOR SOLVING PROBLEM

To solve the problems above and achieve an object, according to one aspect of the present invention, a wireless communications system, a communications apparatus, a terminal, and a base station are proposed where in the wireless communications system including plural terminals; one or more base stations to which the plurality of terminals are connected; and a communications apparatus. For each of the plurality of terminals, in a procedure where a target terminal which is one of the each of the plurality of terminals receives a service from a network the communications apparatus receives a signal which requests establishment of a bearer between the target terminal and the communications apparatus, the signal including information enabling identification of a base station to which the target terminal is connected, The communications apparatus further controls configuring a path used for data transmission and reception between the plural terminals. The path includes a case of bypassing the communications apparatus while passing through the one or more base stations to which the plural terminals are connected.

### EFFECT OF THE INVENTION

According to one aspect of the present invention, an effect is achieved in that control for configuring a shortcut communication path can be efficiently performed.

### BRIEF DESCRIPTION OF DRAWINGS

FIG. 1 is a diagram depicting an example of a wireless communications system according to a first embodiment;
FIG. 2 is a diagram depicting an example of paths in a case where terminals are connected to different base stations in a wireless communications system according to a second embodiment;
FIG. 3 is a flowchart depicting an example of processing performed by the communications apparatus according to the second embodiment;
FIG. 4 is a diagram depicting an example of a wireless communications system according to a third embodiment;
FIG. 5 is a diagram depicting one example of a base station according to the third embodiment;
FIG. 6 is a diagram depicting one example of a terminal according to the third embodiment;
FIG. 7 is a diagram depicting an example of a gateway according to the third embodiment;
FIG. 8 is a diagram depicting one example of hardware configuration of the base station according to the third embodiment;
FIG. 9 is a diagram depicting one example of hardware configuration of the terminal according to the third embodiment;
FIG. 10 is a diagram depicting an example of a hardware configuration of the gateway according to the third embodiment;
FIG. 11 is a sequence diagram depicting an example of processing in the wireless communications system according to the third embodiment;
FIG. 12 is a sequence diagram depicting another example of processing in the wireless communications system according to the third embodiment;
FIG. 13 is a sequence diagram depicting a further example of processing in the wireless communications system according to the third embodiment;
FIG. 14 is a flowchart depicting an example of processing by a PGW according to the third embodiment;
FIG. 15 is a flowchart depicting another example of processing by the PGW according to the third embodiment;
FIG. 16 is a diagram depicting an example of inter-terminal communication by eICBD applicable to the wireless communications system according to the third embodiment;
FIG. 17 is a sequence diagram depicting an example of processing in a wireless communications system according to a fourth embodiment;
FIG. 18 is a sequence diagram depicting an example of processing in a wireless communications system according to a fifth embodiment; and
FIG. 19 is a flowchart depicting an example of processing by a PGW according to the fifth embodiment.

### BEST MODE(S) FOR CARRYING OUT THE INVENTION

Embodiments of a wireless communications system, a communications apparatus, a terminal, and a base station according to the present invention will be described in detail with reference to the accompanying drawings.

### (First Embodiment)

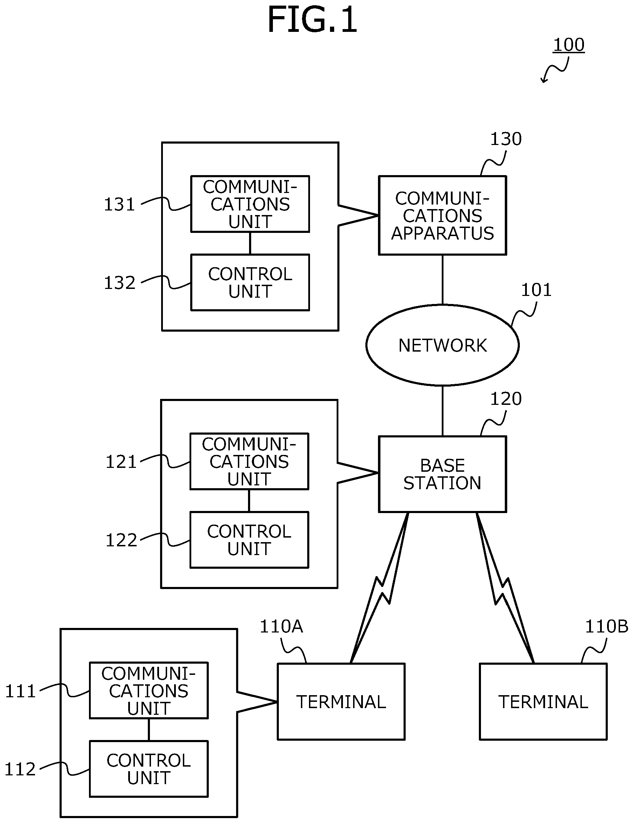

FIG. 1 is a diagram depicting an example of a wireless communications system according to a first embodiment. As depicted in FIG. 1, a wireless communications system 100 according to the first embodiment includes a first terminal 110A, a second terminal 110B, a base station 120, and a communications apparatus 130.

The first terminal 110A is capable of wireless communication with the base station 120, which is a connecting destination of the first terminal 110A. The first terminal 110A can communicate with the communications apparatus 130, via the base station 120. The first terminal 110A performs communication with the second terminal 110B (another terminal). A communication path between the first terminal 110A and the second terminal 110B includes, for example, a first path passing through the base station 120 but not passing through the communications apparatus 130 and a second path passing through the base station 120 and the communications apparatus 130.

The base station 120 performs wireless communication with the first terminal 110A and the second terminal 110B that are connected to the base station 120. The base station 120 may communicate with the communications apparatus 130. Under control from the communications apparatus 130, the base station 120 sets the first path or the second path between the first terminal 110A and the second terminal 110B.

For each of the first terminal 110A and the second terminal 110B as a target, the communications apparatus 130 executes a procedure for the target terminal to receive a service from a network. The procedure for the target terminal to receive a service from a network is, for example, a procedure of registration to the network. The communications apparatus 130 performs the following processing, for each of the first terminal 110A and the second terminal 110B. In the procedure for the target terminal to receive a service from the network, the communications apparatus 130 receives a signal that requests configuration of a bearer between the target terminal and the communications apparatus 130 and that includes information enabling a base station to which the target terminal is connected to be identified.

The communications apparatus 130 performs control of setting the first path as a path for use in transmitting and receiving data between the first terminal 110A and the second terminal 110B. This enables the first terminal 110A and the second terminal 110B to execute communication through the first path.

In this manner, by executing the procedures for the terminals to receive a service from the network, the communications apparatus 130 can receive the signals that request configuration of bearers between the terminals (110A, 110B) and the communications apparatus 130, i.e., information enabling identification of the base station to which the terminals are connected. The communications apparatus 130 then obtains, from the received information, correspondence information indicating the base station to which the terminals are connected and thereby configures a shortcut path, enabling the first path not passing through the communications apparatus 130 to be set between the terminals. As a result, the communications apparatus 130 can efficiently perform control for configuring between terminals, a shortcut path that enables a reduction of the traffic flow in the network.

Details of the first embodiment will be described using a second embodiment.

### (Second Embodiment)

The communications apparatus 130 is, for example, a gateway such as PGW or SGW, connected to the base station 120, via a network 101. The communications apparatus 130 may be connected to the base station 120 without passing through the network 101. In the example depicted in FIG. 1, the first terminal 110A and the second terminal 110B are each connected to the base station 120 and are capable of communicating with the communications apparatus 130, via the base station 120.

The first terminal 110A includes, for example, a communications unit 111 and a control unit 112. The communications unit 111 is capable of wireless communication with the base station 120 to which the terminal 110A is connected. The communications unit 111 is capable of communicating with the communications apparatus 130, via the base station 120.

The control unit 112 controls communication performed by the communications unit 111. For example, the control unit 112 causes the communications unit 111 to execute communication between the first terminal 110A (own terminal) and the second terminal 110B (another terminal). For example, under control from the communications apparatus 130, the control unit 112 causes the communications unit 111 to execute communication through the first path or communication through the second path.

The first path is, for example, a path including a case of not passing through the communications apparatus 130 and is a path (shortcut path) shorter than the second path. The path shorter than the second path refers to, for example, a path having less delay than the second path or a path having a fewer number of passes than the second path. Such a first path is referred to hereinafter as "shortcut path" for the convenience of explanation. For example, the shortcut path is a path passing through the first terminal 110A, the base station 120, and the second terminal 110B, in the mentioned sequence. The shortcut path may be a path passing through the first terminal 110A, the base station 120, a device in the network 101, the base station 120, and the second terminal 110B, in the mentioned sequence.

In a case where the communications apparatus 130 is connected to the base station 120 without passing through the network 101, the shortcut path is, for example, a path passing through the first terminal 110A, the base station 120, and the second terminal 110B, in the mentioned sequence.

The second path is a non-shortcut path passing through the communications apparatus 130. A case will be described hereinafter where the second path is a non-shortcut path. For example, a non-shortcut path is a path including and passing through the first terminal 110A, the base station 120, a device in the network 101, the communications apparatus 130, the device in the network 101, the base station 120, and the second terminal 110B, in the mentioned sequence. This path may be a path including an external network. The non-shortcut path may be a path passing through the first terminal 110A, the base station 120, a device in the network 101, the communications apparatus 130, the external network, the communications apparatus 130, the device in the network 101, the base station 120, and the second terminal 110B, in the mentioned sequence. The external network is, for example, a network (e.g., the Internet) to which the communications apparatus 130 is connected.

In a case where the communications apparatus 130 is connected to the base station 120 without passing through the network 101, the non-shortcut path is, for example, a path including and passing through the first terminal 110A, the base station 120, the communications apparatus 130, the base station 120, and the second terminal 110B, in the mentioned sequence. This path may be a path provided with plural router devices between the communications apparatus 130 and the base station 120. Alternatively, the non-shortcut path may be a path passing through the first terminal 110A, the base station 120, the communications apparatus 130, an external network, the communications apparatus 130, the base station 120, and the second terminal 110B, in the mentioned sequence.

Such a configuration and communication path of the first terminal 110A is similar to a configuration and communication path of the second terminal 110B.

The base station 120 includes a communications unit 121 and a control unit 122. The communications unit 121 performs wireless communication with each of the first terminal 110A and the second terminal 110B that are connected to the base station 120. The communications unit 121 is capable of communicating with the communications apparatus 130.

The control unit 122 causes the communications unit 121 to relay communication between the first terminal 110A and the second terminal 110B. For example, under control from the communications apparatus 130, the control unit 122 causes the communications unit 121 to configure a shortcut path or a non-shortcut path between the first terminal 110A and the second terminal 110B.

The communications apparatus 130 includes, for example, a communications unit 131 and a control unit 132. For each of the first terminal 110A and the second terminal 110B as a target, the communications unit 131 executes a procedure for the target terminal to receive a service from a network. The procedure for the target terminal to receive a service from a network is, for example, a procedure of configuring a bearer (e.g., a communication path) between the target terminal and the communications apparatus 130 (own device). A case will be described hereinafter where the procedure for the target terminal to receive a service from a network is a procedure of configuring a bearer (e.g., a communication path) between the target terminal and the communications apparatus 130 (own device).

The communications unit 131 performs the following processing, for each of the first terminal 110A and the second terminal 110B. In the procedure of configuring a bearer for the target terminal, the communications unit 131 receives a signal that requests configuration a bearer between the target terminal and the communications apparatus 130. The signal further includes information enabling identification of the base station 120, which is the base station to which the target terminal is connected. As a result, for example, the communications unit 131 obtains correspondence information concerning the target terminal and the base station 120 to which the target terminal is connected, in the procedure of configuring a bearer for the target terminal.

The bearer configuration procedure is a procedure of configuring a default bearer of a terminal, for example. The bearer configuration procedure is, for example, a non-access stratum (NAS) initial attach procedure that will be described later. This enables early acquisition of correspondence information concerning the target terminal and the base station 120 to which the target terminal is connected. The bearer configuration procedure may be a NAS service request procedure that will be described later. The NAS initial attach procedure and the NAS service request procedure are network registration procedures for the terminal to receive a service from the network. The bearer configuration procedure is not limited hereto and can be any one of various processes for configuring terminal bearers.

For example, in the bearer configuration procedure, the communications unit 131 receives a signal that includes an identifier of a base station to which a target terminal is connected and that requests configuration of a bearer. The signal requesting configuration of a bearer is, for example, a modify bearer request described later but is not limited hereto. The communications unit 131 can identify the base station to which a target terminal is connected, based on the identifier included in the received signal requesting configuration of a bearer. For example, the communications unit 131 obtains correspondence information concerning the target terminal and the base station to which the target terminal is connected, based on the identifier included in the received signal requesting configuration of a bearer.

In this manner, by receiving a signal that includes the identifier of the base station to which a terminal is connected and requests existing bearer configuration, the communications apparatus 130 can obtain correspondence information concerning the terminal and the base station and therefore, need not use a dedicated control signal for notification of the identifier. Thus, it can be determined whether shortcut communication is possible, by merely obtaining the correspondence information from the signal received in the existing bearer configuration procedure. As a result, increases in the amount of the control signals for configuring a shortcut path can be suppressed, enabling control for configuring a shortcut communication path to be performed efficiently.

The method of obtaining correspondence information by the communications unit 131 is not limited hereto. For example, the communications unit 131 may obtain an identifier of a target terminal or of a bearer, included in a received signal requesting configuration of a bearer. Based on the obtained identifier of the terminal or of the bearer and on information indicating correspondence between the identifier of the terminal or of the bearer and a base station, the communications unit 131 may then identify the base station to which the target terminal is connected and obtain the correspondence information. Alternatively, by using the obtained identifier of the terminal or of the bearer, the communications unit 131 may make an inquiry to another communications apparatus of a corresponding base station and thereby obtain the correspondence information.

Based on the correspondence information obtained by the communications unit 131, the control unit 132 performs control of configuring a shortcut path as a path for use in data transmission/reception between the first terminal 110A and the second terminal 110B. This allows communication through the shortcut path to be executed between the first terminal 110A and the second terminal 110B. Thus, the first terminal 110A and the second terminal 110B can communicate with each other through a path that is shorter than the non-shortcut path and that does not pass through the communications apparatus 130. Accordingly, the traffic flow can be reduced in a path included in the non-shortcut path but not included in the shortcut path. The path included in the non-shortcut path but not included in the shortcut path is, for example, a path between the communications apparatus 130 and the network 101 or a path between the communications apparatus 130 and the base station 120.

For example, the control unit 132 determines based on the correspondence information whether communication through a shortcut path is possible between the first terminal 110A and the second terminal 110B. When determining that communication through a shortcut path is possible, the control unit 132 allows a shortcut path to be configured between the first terminal 110A and the second terminal 110B. When determining that communication through a shortcut path is not possible, the control unit 132 does not configure a shortcut path between the first path 110A and the second terminal 110B. In this case, communication through a non-shortcut path is executed between the first terminal 110A and the second terminal 110B.

Alternatively, when receiving from at least one of the first terminal 110A and the second terminal 110B, control information requesting shortcut path communication, the control unit 132 may determine based on the correspondence information whether shortcut path communication is possible. In this case, if control information requesting shortcut path communication has not been received from both the first terminal 110A and the second terminal 110B, the control unit 132 does not configure a shortcut path between the first path 110A and the second path 110B. In this case, non-shortcut path communication is executed between the first terminal 110A and the second terminal 110B.

When determining that the shortcut path communication is possible, the control unit 132 may control the communications unit 131 to transmit control information for configuring a shortcut path, in control to configure the shortcut path. In this case, the control unit 132 may transmit control information for configuring a shortcut path, the control information being stored to a signal requesting configuration of an individual bearer of one terminal of the first terminal 110A and the second terminal 110B, for example.

In this manner, since the communications apparatus 130 can transmit control information for configuring a shortcut path, stored to a signal requesting existing individual bearer configuration, the communications apparatus 130 need not use a dedicated control signal. Thus, it becomes possible to configure the shortcut path by merely storing the control information for configuring a shortcut path to a signal transmitted in an existing bearer configuration procedure. As a result, an increase in the amount of the control signals for configuring a shortcut path can be suppressed. Thus, control for configuring a shortcut communication path can be performed efficiently.

Control information for configuring a communication path includes an identifier of a delivery destination (forwarding destination) of data from the first terminal 110A, by a relay device between the communications apparatus 130 and the first terminal 110A, for example. This relay device is, for example, the base station 120 depicted in FIG. 1. In this case, the control information for configuring a communication path includes, for example, an identifier of the base station 120 (local shortcut) or the second terminal 110B as a delivery destination of data from the first terminal 110A. This enables the base station 120 to be set so as to forward and deliver data from the first terminal 110A to the second terminal 110B.

The relay device between the communications apparatus 130 and the first terminal 110A may be a device of the network 101 depicted in FIG. 1, for example. In this case, the control information for configuring a communication path includes, for example, an identifier of the second base station 120B as a delivery destination of data from the first terminal 110A. This enables a device of the network 101 to be set so as to forward and deliver data from the first terminal 110A to the second base station 120B. The device of the network 101 is, for example, a device of the network 101 (e.g., at least one of a first SGW 441 and a second SGW 442 that will be described later).

The shortcut path may include plural gateways (e.g., the first SGW 441 and the second SGW 442 that will be described later) of the network 101, capable of transmitting data from the first terminal 110A to the second terminal 110B. In this case, control information for configuring a shortcut path may include information instructing to switch a gateway transmitting/receiving data from the first terminal 110A, among the plural gateways of the network 101.

This enables the gateway of the network 101 forwarding data from the first terminal 110A to the second terminal 110B to be changed to a gateway different from the gateway set at the first terminal 110A, for example. Therefore, it becomes possible to configure the shortcut path more flexibly.

In a procedure of configuring a bearer between the first terminal 110A and the communications apparatus 130, the first terminal 110A may transmit control information requesting shortcut path communication to the communications apparatus 130 as a destination. The procedure of configuring a bearer between the first terminal 110A and the communications apparatus 130 is, for example, a procedure of configuring a bearer between the first terminal 110A and the communications apparatus 130.

In this manner, since the first terminal 110A can transmit to the communications apparatus 130, control information requesting shortcut path communication, stored to a signal transmitted in an existing bearer configuration procedure, the first terminal 110A need not use a dedicated control signal. Thus, it becomes possible to request the communications apparatus 130 to perform shortcut path communication by merely storing control information requesting shortcut path communication to a signal sent in an existing bearer configuration procedure. As a result an increase in the amount of control signals between the first terminal 110A and the communications apparatus 130 for configuring a shortcut path can be suppressed, enabling control for configuring a shortcut communication path to be carried out efficiently.

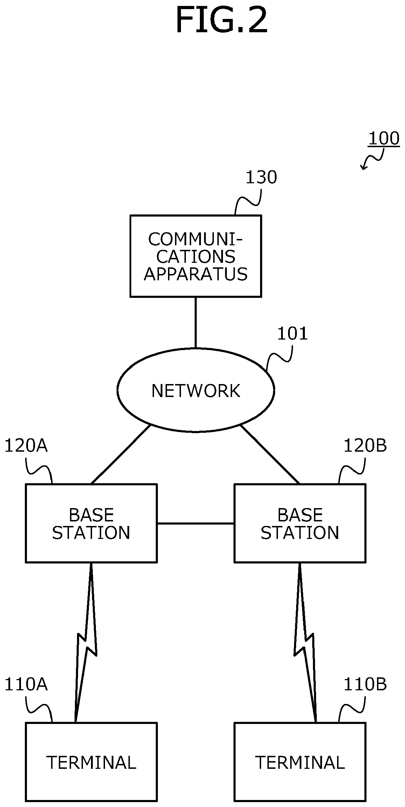

FIG. 2 is a diagram depicting an example of paths in a case where terminals are connected to different base stations in a wireless communications system according to the second embodiment. In FIG. 2, parts identical to those depicted in FIG. 1 are given the same reference numerals used in FIG. 1 and explanations thereof will be omitted. In FIG. 1, a case is described where the first terminal 110A and the second terminal 110B are both connected to the base station 120. On the contrary, in FIG. 2, a case is described where the first terminal 110A is connected to a first base station 120A while the second terminal 110B is connected to a second base station 120B.

The first base station 120A and the second base station 120B are base stations corresponding to the base station 120 and are base stations different from each other. The first base station 120A and the second base station 120B may be connected to each other by, for example, a physical interface or a logical interface.

In this case, a non-shortcut path is, for example, a path passing through the first terminal 110A, the first base station 120A, a device of the network 101, the communications apparatus 130, a device of the network 101, the second base station 120B, and the second terminal 110B, in the mentioned sequence. The non-shortcut path is, for example, a path passing through the first terminal 110A, the first base station 120A, a device of the network 101, the communications apparatus 130, an external network, the communications apparatus 130, a device of the network 101, the second base station 120B, and the second terminal 110B, in the mentioned sequence.

As described above, the communications apparatus 130 may be connected to the first base station 120A and the second base station 120B without passing through the network 101. In this case, the non-shortcut path is, for example, a path passing through the first terminal 110A, the first base station 120A, the communications apparatus 130, the second base station 120B, and the second terminal 110B, in the mentioned sequence. The non-shortcut path may be a path passing through the first terminal 110A, the first base station 120A, the communications apparatus 130, the external network, the communications apparatus 130, the second base station 120B, and the second terminal 110B, in the mentioned sequence.

A shortcut path is, for example, a path passing through the first terminal 110A, the first base station 120A, the second base station 120B, and the second terminal 110B, in the mentioned sequence. The shortcut path may be, for example, a path passing through the first terminal 110A, the first base station 120A, a device in the network 101, the second base station 120B, and the second terminal 110B, in the mentioned sequence.

As described above, the communications apparatus 130 may be connected to the first base station 120A and the second base station 120B without passing through the network 101. In this case, the shortcut path is a path passing through the first path 110A, the first base station 120A, the second base station 120B, and the second terminal 110B, in the mentioned sequence.

Also in the example depicted in FIG. 2, for each of the first terminal 110A and the second terminal 110B as a target, the communications apparatus 130 obtains correspondence information concerning the target terminal and the base station 120 to which the target terminal is connected, in a procedure of configuring a bearer between the target terminal and the device. Based on the obtained correspondence information, the communications apparatus 130 then performs control to configure a shortcut path or a non-shortcut path as a path for use in transmitting/receiving data between the first terminal 110A and the second terminal 110B. This allows shortcut path or non-shortcut path communication to be executed between the first terminal 110A and the second terminal 110B. In the case of executing shortcut path communication, the path can be configured efficiently.

A relay device between the communications apparatus 130 and the first terminal 110A may be, for example, the first base station 120A depicted in FIG. 2. In this case, control information for configuring a communication path includes an identifier of the second base station 120B, for example, as a delivery destination of data from the first terminal 110A. This enables the first base station 120A to be set so as to forward and deliver data from the first terminal 110A to the second base station 120B.

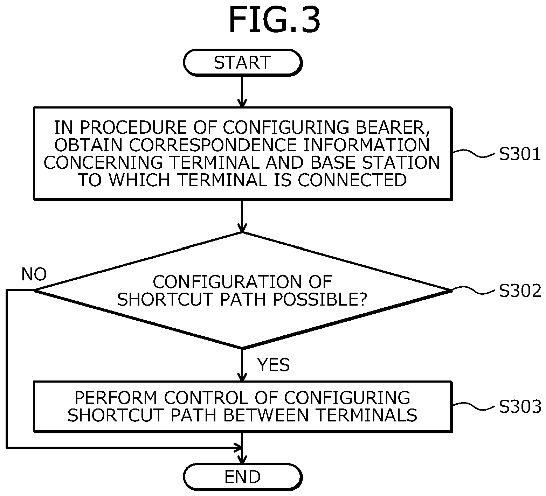

FIG. 3 is a flowchart depicting an example of processing performed by the communications apparatus according to the second embodiment. The communications apparatus 130 according to the second embodiment executes steps depicted in FIG. 3, for example. For each of the first terminal 110A and the second terminal 110, as a target, communicating with each other, the communications apparatus 130 first obtains correspondence information concerning the target terminal and the base station to which the target terminal is connected (step S301). The communications apparatus 130 performs step S301 in a procedure of configuring a bearer between the target terminal and the device.

Based on the correspondence information obtained at step S301, the communications apparatus 130 then determines whether configuration of a shortcut path between the first terminal 110A and the second terminal 110B is possible (step S302). When determining that configuration of a shortcut path is possible (step S302: YES), the communications apparatus 130 performs control to configure a shortcut path as a path for use in transmitting/receiving data between the first terminal 110A and the second terminal 110B (terminals) (step S303), ending a series of operations. Thus, shortcut path communication can be executed between the first terminal 110A and the second terminal 110B.

At step S302, when determining that configuration of a shortcut path is not possible (step S302: NO), the communications apparatus 130 ends the series of operations without configuring a shortcut path. In this case, for example, non-shortcut path communication through the communications apparatus 130 is executed between the first terminal 110A and the second terminal 110B.

In this manner, according to the second embodiment, the communications apparatus 130 can obtain correspondence information concerning the first and second terminals 110A, 110B and access points thereof (e.g., the base station 120) in a procedure of configuring bearers of the first terminal 110A and the second terminal 110B. As a result, control for configuring a communication path shortcut by the first terminal 110A and the second terminal 110B can efficiently be performed.

The shortcut path can be configured sooner to start shortcut communication, as compared with, for example, a method in which after configuring bearers of the terminals, information indicating an access base station of each terminal is collected so that a shortcut path is configured based on the collected information.

An example of configuration corresponding to the second embodiment will be described using third to fifth embodiments.

### (Third Embodiment)

Since the third embodiment is an embodiment obtained by embodying the configurations described in the first embodiment and the second embodiment, it may obviously be carried out in combination with the first and second embodiments.

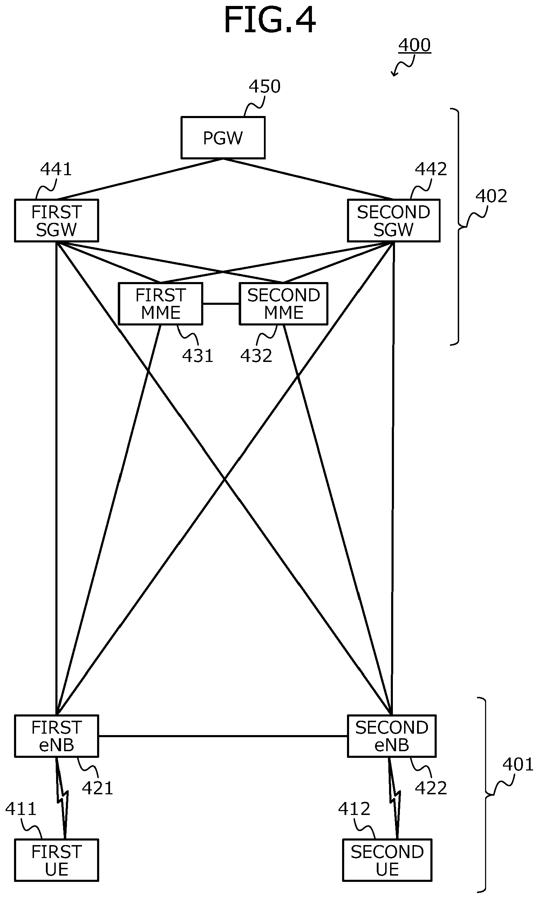

FIG. 4 is a diagram depicting an example of a wireless communications system according to the third embodiment. As depicted in FIG. 4, a wireless communications system 400 according to the third embodiment includes a wireless access network 401 and a packet core network 402. The wireless communications system 400 is, for example, a mobile communications system such as LTE or LTE-Advanced defined by 3GPP, but the communication standard of the wireless communications system 400 is not limited hereto.

The wireless access network 401 includes first user equipment (UE) 411, a second UE 412, a first evolved node B (eNB) 421, and a second eNB 422. The wireless access network 401 is, for example, an evolved universal terrestrial radio access network (E-UTRAN) defined under 3GPP, but is not particularly limited hereto.

The packet core network 402 includes a first mobility management entity (MME) 431, a second MME 432, a first SGW 441, a second SGW 442, and a PGW 450. The packet core network 402 is, for example, an EPC defined under 3GPP, but is not particularly limited hereto. The core network defined in 3GPP may be called system architecture evolution (SAE).

The first UE 411 is a terminal located within a cell of the first eNB 421 and performs wireless communication with the first eNB 421. The first UE 411 communicates with another communications apparatus by a path passing through the first eNB 421, the first SGW 441, and the PGW 450, for example. Another communications apparatus communicating with the first UE 411 is, for example, a communications terminal different from the first UE 411, or a server. Communication between the first UE 411 and another communications apparatus is data communication or audio communication, for example, but is not particularly limited hereto.

The second UE 412 is a terminal located within a cell of the second eNB 422 and performs wireless communication with the second eNB 422. The second UE 412 communicates with another communications apparatus by a path passing through the second eNB 422, the second SGW 442, and the PGW 450, for example. Another communications apparatus communicating with the second UE 412 is, for example, a communications terminal different from the second UE 412, or a server. Communication between the second UE 412 and another communications apparatus is data communication or audio communication, for example, but is not particularly limited hereto. Audio communication is voice over LTE (VoLTE), for example, but is not particularly limited hereto.

The first eNB 421 is a base station that forms a cell and performs wireless communication with the first UE 411 located within the cell. The first eNB 421 relays communication between the first UE 411 and the first SGW 441. The second eNB 422 is a base station that forms a cell and performs wireless communication with the second UE 412 located within the cell. The second eNB 422 relays communication between the second UE 412 and the second SGW 442. The first eNB 421 and the second eNB 422 may be connected to each other by a physical or logical interface between base stations, for example. The interface between base stations is an X2 interface, for example, but is not particularly limited hereto.

The first MME 431 accommodates the first eNB 421 and performs control plane (C-plane) processing for communication passing through the first eNB 421. For example, the first MME 431 performs the C-plane processing for communication of the first UE 411 via the first eNB 421. The C-plane is, for example, a function group for controlling a call or a network between devices. For example, the C-plane is used for packet call connection, path configuration for user data transmission, handover control, etc.

The second MME 432 accommodates the second eNB 422 and performs the C-plane processing for communication passing through the second eNB 422. For example, the second MME 432 performs the C-plane processing for communication of the second UE 412 via the second eNB 422.

The first SGW 441 accommodates the first eNB 421 and performs user plane (U-plane) processing for communication passing through the first eNB 421. For example, the first SGW 441 performs the U-plane processing for communication of the first UE 411. The U-plane is a function group for transmission of user data (packet data).

The second SGW 442 accommodates the second eNB 422 and performs the U-plane processing for communication passing through the second eNB 422. For example, the second SGW 442 performs the U-plane processing for communication of the second UE 412.

The PGW 450 is a gateway for connection to an external network. The external network is the Internet, for example, but is not particularly limited hereto. The PGW 450 relays user data between the first SGW 441 and the external network, for example. The PGW 450 may relay user data between the second SGW 442 and the external network. In a case where communication is performed by a path shortcut at the PGW 450 between the first UE 411 and the second UE 412, for example, the PGW 450 may relay user data between the first SGW 441 and the second SGW 442.

A path in a case where the first UE 411 and the second UE 412 communicate with each other will be described. Communication in this case is data communication or audio communication, for example, but is not particularly limited hereto. The first UE 411 and the second UE 412 can communicate with each other by a path passing through the first eNB 421, the first SGW 441, the PGW 450, the second SGW 442, and the second eNB 422, for example.

As another example, the first UE 411 and the second UE 412 can communicate with each other by a path shortcut at the eNBs. For example, the first UE 411 and the second UE 412 can communicate with each other by a path passing through the first eNB 421 and the second eNB 422 but not passing through the first SGW 441, the PGW 450, and the second SGW 442. In this case, communication is performed via an interface between base stations between the first eNB 421 and the second eNB 422.

As another example, the first UE 411 and the second UE 412 can communicate with each other through a path shortcut at the SGW. For example, the first UE 411 and the second UE 412 can communicate with each other by a path passing through the first eNB 421, the first SGW 441, and the second eNB 422 but not though the PGW 450 and the second SGW 442. Alternatively, the first UE 411 and the second UE 412 can communicate with each other by a path passing through the first eNB 421, the second SGW 442, and the second eNB 422 but not through the first SGW 441 and the PGW 450.

The shortcut path in communication between the first UE 411 and the second UE 412 is not limited to paths shortcut at the eNB or the SGW, and can be, for example, paths shortcut at communications apparatuses (e.g., PGW 450) included in the packet core network 402.

The first terminal 110A and the second terminal 110B depicted in FIGs. 1 and 2 can be implemented by the first UE 411 and the second UE 412, for example. The base station 120 depicted in FIG. 1 and the first base station 120A and the second base station 120B depicted in FIG. 2 can be implemented by the first eNB 421 and the second eNB 422, for example.

The communications apparatus 130 depicted in FIGs. 1 and 2 can be implemented by the first SGW 441, the second SGW 442, or the PGW 450, for example. In the case of implementing the communications apparatus 130 depicted in FIGs. 1 and 2 by the PGW 450, the gateways included in the network 101 depicted in FIGs. 1 and 2 can be implemented by the first SGW 441 and the second SGW 442, for example. Hereinafter, a case will be described where the communications apparatus 130 depicted in FIGs. 1 and 2 is implemented by the PGW 450, while the gateways included in the network 101 depicted in FIGs. 1 and 2 being implemented by the first SGW 441 and the second SGW 442.

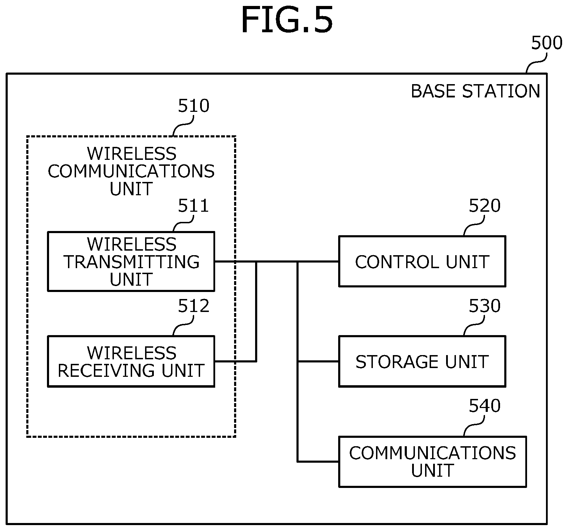

FIG. 5 is a diagram depicting one example of the base station according to the third embodiment. The first eNB 421 and the second eNB 422 can each be realized by, for example, a base station 500 depicted in FIG. 5. As depicted in FIG. 5, the base station 500 includes, for example, a wireless communications unit 510, a control unit 520, a storage unit 530, and a communications unit 540. The wireless communications unit 510 includes a wireless transmitting unit 511 and a wireless receiving unit 512. These configurations are connected so as to enable unidirectional or bidirectional input and output of data and signals.

The wireless transmitting unit 511 transmits user data and a control signal by wireless communication, via an antenna. A wireless signal transmitted by the wireless transmitting unit 511 can include arbitrary user data, control information, etc. (that has been encoded, modulated, etc.). The wireless receiving unit 512 receives user data and control signals by wireless communication, via an antenna. A wireless signal received by the wireless receiving unit 512 can include arbitrary user data, a control signal, etc. (that has been encoded, modulated, etc.). A common antenna may be used for transmission and reception.

The control unit 520 outputs to the wireless transmitting unit 511, user data and control signals that are to be transmitted to another wireless station. Further, the control unit 520 obtains user data and control signals received by the wireless receiving unit 512. The control unit 520 performs the input and output of programs, control information, user data, etc. with respect to the storage unit 530 described hereinafter. Further, the control unit 520 performs with respect to the communications unit 540 described hereinafter, the input and output of control signals and user data transmitted to and received from another communications apparatus, etc. The control unit 520 additionally performs other various types of control in the base station 500.

The storage unit 530 stores various types of information such as user data, control information, programs, etc. The communications unit 540, for example, by a wired signal, transmits to and receives from another communications apparatus, user data and control signals.

The communications unit 121 of the base station 120 depicted in FIG. 1 and of the first base station 120A and the second base station 120B depicted in FIG. 2 can be implemented by the wireless communications unit 510 and the communications unit 540, for example. The control unit 122 of the base station 120 depicted in FIG. 1 and of the first base station 120A and the second base station 120B can be implemented by the control unit 520, for example.

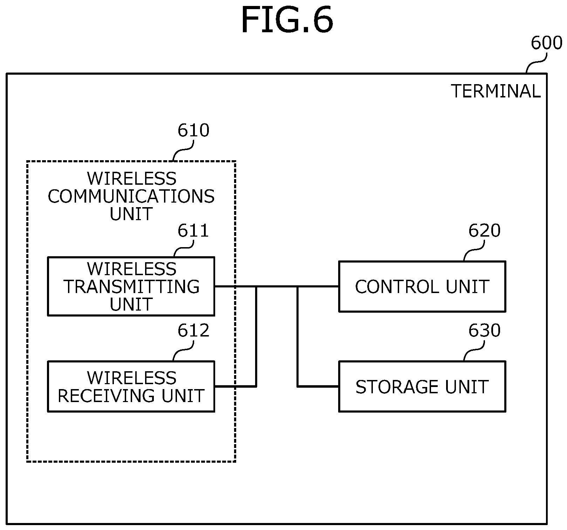

FIG. 6 is a diagram depicting one example of a terminal according to the third embodiment. The first UE 410 and the second UE 412, for example, can be implemented by a terminal 600 depicted in FIG. 6. The terminal 600 includes a wireless communications unit 610, a control unit 620, and a storage unit 630. The wireless communications unit 610 includes a wireless transmitting unit 611 and a wireless receiving unit 612. These configurations are connected so as to enable unidirectional or bidirectional input and output of data and signals.

The wireless transmitting unit 611 transmits user data and a control signal by wireless communication, via an antenna. A wireless signal transmitted by the wireless transmitting unit 611 can include arbitrary user data, control information, etc. (that has been encoded, modulated, etc.). The wireless receiving unit 612 receives user data and control signals by wireless communication, via an antenna. A wireless signal received by the wireless receiving unit 612 can include arbitrary user data, a control signal, etc. (that has been encoded, modulated, etc.). A common antenna may be used for transmission and reception.

The control unit 620 outputs to the wireless transmitting unit 611, user data and control signals that are to be transmitted to another wireless station. Further, the control unit 620 obtains user data and control signals received by the wireless receiving unit 612. The control unit 620 performs the input and output of programs, control information, user data, etc. with respect to the storage unit 630 described hereinafter. Further, the control unit 620 performs with respect to a communications unit described hereinafter, the input and output of control signals and user data transmitted to and received from another communications apparatus, etc. The control unit 620 additionally performs various types of control in the terminal 600. The storage unit 630 stores various types of information such as user data, control information, programs, etc.

The communications unit 111 of the first terminal 110A and the second terminal 110B depicted in FIGs. 1 and 2 can be implemented by the wireless communications unit 610, for example. The control unit 112 of the first terminal 110A and the second terminal 110B depicted in FIGs. 1 and 2 can be implemented by the control unit 620, for example.

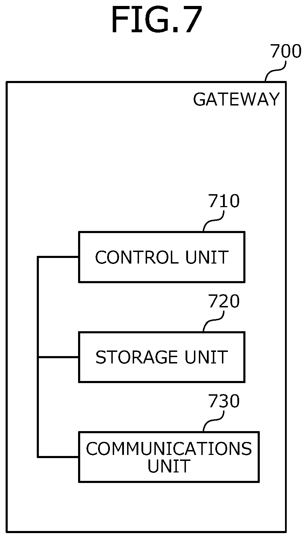

FIG. 7 is a diagram depicting an example of a gateway according to the third embodiment. The PGW 450 can be implemented by a gateway 700 depicted in FIG. 7 for example. As depicted in FIG. 7, the gateway 700 includes, for example, a control unit 710, a storage unit 720, and a communications unit 730. These components are connected to one another so as to enable unidirectional or bidirectional input and output of signals or data.

The control unit 710 performs the input and output of user data, control information, programs, etc. with respect to the storage unit 720 described later. The control unit 710 performs with respect to the communications unit 730 described later, the input and output of user data or control signals transmitted to and received from another communications apparatus, etc. The control unit 710 additionally performs other various types of control in the gateway 700.

The storage unit 720 stores various types of information such as user data, control information, and programs. The communications unit 730 transmits to and receives from, for example, another communications apparatus, user data or control signals in the form of wired signals.

The communications unit 131 of the communications apparatus 130 depicted in FIGs. 1 and 2 can be implemented by the communications unit 730, for example. The control unit 132 of the communications apparatus 130 depicted in FIG. 1 can be implemented by the control unit 710, for example.

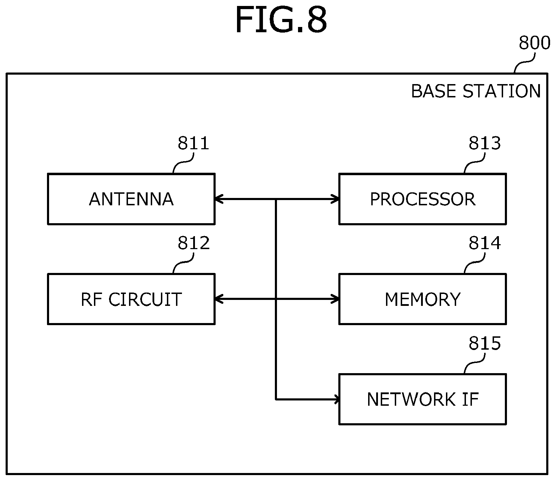

FIG. 8 is a diagram depicting one example of hardware configuration of the base station according to the third embodiment. The base station 500 depicted in FIG. 5, for example, can be implemented by a base station 800 depicted in FIG. 8. The base station 800 includes an antenna 811, an RF circuit 812, a processor 813, a memory 814, and a network IF 815. These components, for example, are connected via a bus so as to enable the input and output of various signals and data.

The antenna 811 includes a transmission antenna that transmits wireless signals and a reception antenna that receives wireless signals. Further, the antenna 811 may be a common antenna used for both transmitting and receiving wireless signals. The RF circuit 812 performs a radio frequency ((RF): high frequency) process for signals received by the antenna 811 and signals transmitted by the antenna 811. The RF process, for example, includes frequency conversion for a baseband and an RF band.

The processor 813, for example, is a central processing unit (CPU), a digital signal processor (DSP), or the like. Further, the processor 813 may be implemented by a digital electronic circuit such as an Application Specific Integrated Circuit (ASIC), a Field Programmable Gate Array (FPGA), a Large Scale Integration ((LSI): large-scale integrated circuit), or the like.

The memory 814, for example, can be implemented by flash memory, read-only memory (ROM), random access memory (RAM) such as Synchronous Dynamic Random Access Memory (SDRAM), etc. The memory 814 stores, for example, user data, control information, programs, and the like.

The network IF 815 is, for example, a communications interface that performs wired communication with a network. The network IF 815 may include, for example, an Xn interface for performing wired communication with a base station.

The wireless communications unit 510 depicted in FIG. 5, for example, can be implemented by the RF circuit 812 and the antenna 811. The control unit 520 depicted in FIG. 5, for example, can be implemented by the processor 813. The storage unit 530 depicted in FIG. 5, for example, can be implemented by the memory 814. The communications unit 540 depicted in FIG. 5, for example, can be implemented by the network IF 815.

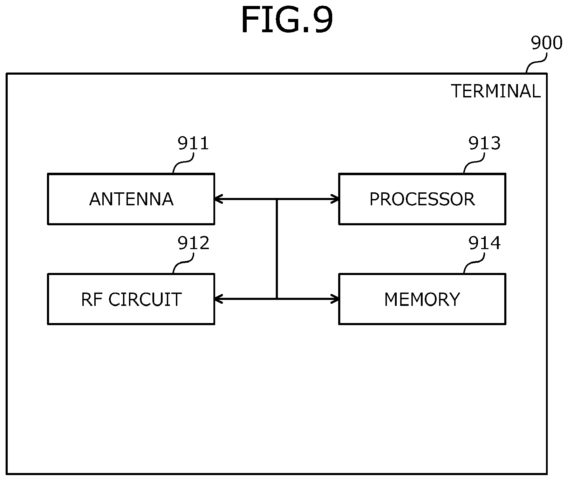

FIG. 9 is a diagram depicting one example of hardware configuration of the terminal according to the third embodiment. The terminal 600 depicted in FIG. 6, for example, can be implemented by a terminal 900 depicted in FIG. 9. The terminal 900 includes, for example, an antenna 911, an RF circuit 912, a processor 913, and a memory 914. The components, for example, are connected via a bus so as to enable the input and output of various signals and data.

The antenna 911 includes a transmission antenna that transmits wireless signals and a reception antenna that receives wireless signals. Further, the antenna 911 may be a common antenna used for both transmitting and receiving wireless signals. The RF circuit 912 performs an RF process for signals received by the antenna 911 and for signals transmitted by the antenna 911. The RF process, for example, includes frequency conversion for a baseband and an RF band.

The processor 913, for example, is a CPU, a DSP, or the like. Further, the processor 913 may be implemented by a digital electronic circuit such as an ASIC, a FPGA, an LSI, or the like.

The memory 914, for example, can be implemented by flash memory, ROM, RAM such as SDRAM, etc. The memory 914 stores, for example, user data, control information, programs, and the like.

The wireless communications unit 610 depicted in FIG. 6, for example, can be implemented by the antenna 911 and the RF circuit 912. The control unit 620 depicted in FIG. 6, for example, can be implemented by the processor 913. The storage unit 630 depicted in FIG. 6, for example, can be implemented by the memory 914.

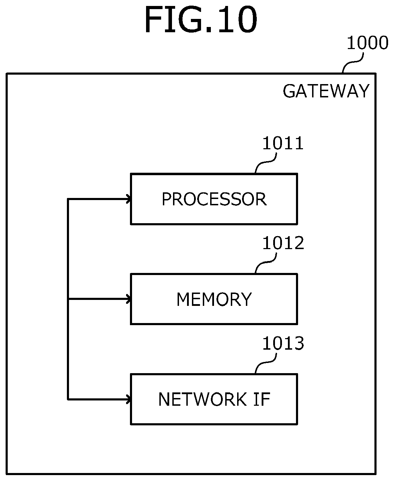

FIG. 10 is a diagram depicting an example of a hardware configuration of the gateway according to the third embodiment. The gateway 700 depicted in FIG. 7 can be implemented by a gateway 1000 depicted in FIG. 10, for example. The gateway 1000 includes a processor 1011, a memory 1012, and a network IF 1013. These components are connected to one another so as to enable the input and output of various signals or data by way of a bus, for example.

The processor 1011 is a CPU or a DSP, for example. The processor 1011 may be implemented by a digital electronic circuit such as ASIC, FPGA, or LSI.

The memory 1012 can be implemented by RAM such as SDRAM, ROM, or flash memory, for example. The memory stores, for example, user data, control information, programs, etc.

The network IF 1013 is, for example, a communication interface enabling wired communication with a network. The network IF 1013 may include, for example, an S1 interface for communicating with a base station or an S5 interface for communicating with PGW.

The control unit 710 depicted in FIG. 7 can be implemented by the processor 1011, for example. The storage unit 720 depicted in FIG. 7 can be implemented by the memory 1012, for example. The communications unit 730 depicted in FIG. 7 can be implemented by the network IF 1013, for example.

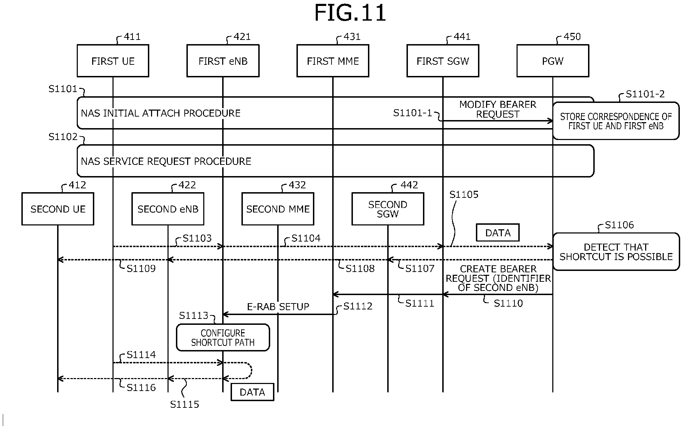

FIG. 11 is a sequence diagram depicting an example of processing in the wireless communications system according to the third embodiment. In the wireless communications system 400 according to the third embodiment, steps depicted in FIG. 11 for example are executed. In FIG. 11, a case will be described where the first UE 411 is connected to the first eNB 421 and the second UE 412 is connected to the second eNB 422.

First, the NAS initial attach procedure is performed for configuring a default bearer between the first UE 411 and the PGW 450 (step S1101). The default bearer is a bearer that is firstly set between the first UE 411 and the PGW 450. The NAS initial attach procedure at step S1101 can be a procedure defined in 5.3.2.1 (E-UTRAN Initial Attach) of TS23.401 of 3GPP, for example, but is not limited hereto.

The NAS initial attach procedure at step S1101 includes step S1101-1 at which the first SGW 441 transmits to the PGW 450, a modify bearer request requesting configuration of a bearer. The PGW 450 stores correspondence of the first UE 411 and the first eNB 421, based on the modify bearer request received at step S1101-1 (step S1101-2). Storage by the PGW 450 is by the storage unit 720 depicted in FIG. 7, for example.

At step S1101-2, the PGW 450 obtains identifiers of the first UE 411 and the first eNB 421 from the received modify bearer request and stores the obtained identifiers associated with each other.

For example, the modify bearer request includes an identifier of the first UE 411 and an identifier of the first eNB 421 to which the first UE 411 is connected so that the PGW 450 can obtain identifiers included in the modify bearer request. The identifier of the first UE 411 included in the modify bearer request is an ME identity (MEI), for example, but is not limited hereto. The identifier of the first eNB 421 included in the modify bearer request is an eNodeB address, for example, but is not limited hereto.

Alternatively, the modify bearer request includes an identifier (e.g., bearer ID) of a bearer between the first UE 411 and the PGW 450 so that, based on this identifier, the PGW 450 may obtain an identifier of at least one of the first UE 411 and the first eNB 421. For example, the PGW 450 stores correspondence information concerning the bearer identifier and the identifier of at least one of the first UE 411 and the first eNB 421. In this case, the PGW 450 can obtain the identifier of at least one of the first UE 411 and the first eNB 421, based on the bearer identifier included in the modify bearer request and on the correspondence information.

Alternatively, by an inquiry to the first MME 431 using the bearer identifier included in the modify bearer request, the PGW 450 may obtain the identifier of at least one of the first UE 411 and the first eNB 421. The inquiry destination of the identifier is not limited to the first MME 431 and may be a home subscriber server (HSS), for example.

In this manner, when receiving a modify bearer request in the NAS initial attach procedure between the PGW 450 and the first UE 411, the PGW 450 stores the correspondence of the first UE 411 and the first eNB 421. Similarly in the case of the second UE 412, i.e., the PGW 450 receives a modify bearer request in the NAS initial attach procedure between the PGW 450 and the second UE 412 and stores the correspondence of the second UE 412 and the second eNB 422.

The NAS service request procedure for configuring a bearer between the first UE 411 and the PGW 450 is performed (step S1102). For example, a procedure defined in 5.3.4 (Service Request procedures) of TS23.401 of 3GPP can be used as the NAS service request procedure at step S1102, but this is not limitative.

The first UE 411 transmits data (Data) destined for the second UE 412 to the first eNB 421 (step S1103). The first eNB 421 transmits the data received at step S1103 to the first SGW 441 (step S1104). The first SGW 441 transmits the data received at step S1104 to the PGW 450 (step S1105).

The PGW 450 detects that the data from the first UE 411 to the second UE 412 can be shortcut at the first eNB 421 (step S1106). At step S1106, the PGW 450 can perform detection, based on correspondence of the first UE 411 and the first eNB 421 stored at step S1101-2 or based on the correspondence of the second UE 412 and the second eNB 422, stored separately from that at step S1101-2.

For example, when receiving first data from the first UE 411, the PGW 450 analyzes an IP header of the received first data, to thereby identifies the second UE 412 as being the destination. The first data is, for example, first user data (first packet) after to the NAS service request procedure at step S1102.

For example, the first UE 411 connects to the first eNB 421 while the second UE 412 connects to the second eNB 422. The first eNB 421 and the second eNB 422 are both base stations subordinate to the PGW 450 and can communicate with each other. Thus, at step S1106, the PGW 450 can determine that data from the first UE 411 to the second UE 412 can be shortcut at the first eNB 421.

The PGW 450 transmits the data received at step S1105 to the second SGW 442 (step S1107). The sequence of steps S1106 and S1107 may be interchanged. The second SGW 442 transmits the data received at step S1107 to the second eNB 422 (step S1108). The second eNB 422 transmits the data received at step S1108 to the second UE 412 (step S1109). Thus, the data transmitted from the first UE 411 at step S1103 is received by the second UE 412.

The PGW 450 transmits to the first SGW 441, a create bearer request for configuring an individual bearer of the first UE 411 (step S1110). "Create Bearer Request" defined in 5.4.1 "Dedicated bearer activation" of TS23.401 of 3GPP, for example, can be used as the create bearer request sent at step S1110, but this is not limitative.

At step 1106, having detected that the data can be shortcut, the PGW 450 stores to the create bearer request transmitted at step S1106, an identifier of the second eNB 422 as a shortcut point. This enables the first MME 431 to be notified of an identifier of the second eNB 422 as a shortcut point.

The first SGW 441 transmits to the first MME 431, the create bearer request including the identifier of the second eNB 422, received at step S1110 (step S1111).

The first MME 431 transmits to the first eNB 42, an E-RAB setup based on the identifier of the second eNB 422 included in the create bearer request received at step S1111 (step S1112). The E-RAB setup transmitted at step S1112 is a control signal instructing the first eNB 421 to change the delivery destination of data from the first UE 411 to the second eNB 422.

This E-RAB setup is defined as "E-RAB Setup" in TS36.413 of 3GPP, for example, whereas it is defined as "Bearer Setup Request" in 5.4.1 (Dedicated bearer activation) of TS23.401 of 3GPP. The format of the control signal sent at step S1112 is not limited hereto.

Next, based on the E-RAB setup received at step S1112, the first eNB 421 configures a shortcut path shortcutting data from the first UE 411 destined for the second UE 412, at the first eNB 421 (step S1113). The shortcut path is a shortcut path not passing through the PGW 450. Thus, the first eNB 421 changes the delivery destination of data from the first UE 411 to the second eNB 422.

As a result, when the first UE 411 transmits data destined for the second UE 412, the data is transmitted through the shortcut path configured at step S1113 as follows. For example, first, the first UE 411 transmits to the first eNB 421, the data destined for the second UE 412 (step S1114). Next, the first eNB 421 shortcuts the data received at step S1114 and transmits the data to the second eNB 422 (step S1115). Next, the second eNB 422 transmits the data received at step S1115 to the second UE 412 (step S1116).

At step S1115, for example, data transmission from the first UE 411 to the second UE 412 is performed through an interface between base stations between the first eNB 421 and the second eNB 422. This interface between base stations may be a physical interface directly connecting the first eNB 421 and the second eNB 422, or a logical interface connecting the first eNB 421 and the second eNB 422 via another device.

The PGW 450 may store to the create bearer request transmitted at step S1110, control information specifying that data from the first UE 411 to the second UE 412 is shortcut at the first eNB 421. This enables the first eNB 421, for example, to configure a shortcut path shortcut at the first eNB 421, as opposed to being shortened and shortcut at the SGW (e.g., first SGW 441) that will be described later.

The method of storing to the create bearer request, control information specifying that the data from the first UE 411 to the second UE 412 is to be shortcut at the first eNB 421 is not particularly limited. For example, the first eNB 421 may autonomously determine whether to shortcut at the first eNB 421 or to shortcut at the SGW that will be described later, on the basis of connection relationships concerning the first UE 411 and the second UE 412.

In this manner, by utilizing the NAS initial attach procedure, the PGW 450 can store correspondence between the first UE 411 and the first eNB 421 and correspondence between the second UE 412 and the second eNB 422. As a result, the first UE 411 and the second UE 412 can each know which base station is their respective access point prior to the NAS service request procedure, for example, whereby delays in configuring the shortcut path can be reduced.

In the NAS initial attach procedure at step S1101, at least one of the first UE 411 and the second UE 412 may transmit information indicating a desire to perform shortcut path communication. For example, the information indicating a desire to perform shortcut path communication can be stored to various signals transmitted by UE, such as "Attach Request" defined in 5.3.2.1 (E-UTRAN Initial Attach) of tS23.401 of 3GPP.

A trigger to configure a shortcut path is not limited to a request from the first UE 411 or the second UE 412, and can be various triggers. For example, the first MME 431 or the second MME 432 may determine the configuration of a shortcut path, based on a service type of the first UE 411 or the second UE 412. For example, when the communication type of the first UE 411 or the second UE 412 is a service (e.g. VoIP) with a high QoS class, the first MME 431 or the second MME 432 may autonomously configure a shortcut path.

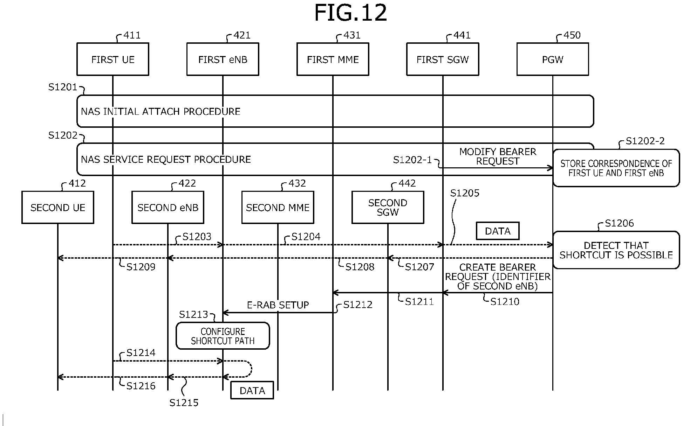

FIG. 12 is a sequence diagram depicting another example of processing in the wireless communications system according to the third embodiment. In the wireless communications system 400 according to the third embodiment, steps depicted in FIG. 12, for example, may be executed. Steps S1201 to S1216 depicted in FIG. 12 are similar to steps S1101 to S1116 depicted in FIG. 11.

It is to be noted, however, that a NAS service request procedure at step S1202 includes step S1202-1 at which the first SGW 441 transmits a modify bearer request to the PGW 450. The PGW 450 stores correspondence between the first UE 411 and the first eNB 421, based on the modify bearer request received at step S1202-1 (step S1202-2). The NAS service request procedure at step S1202 depicted in FIG. 12 may include a modify bearer request.

In this manner, when receiving the modify bearer request in the NAS service request procedure between the PGW 450 and the first UE 411, the PGW 450 stores the correspondence between the first UE 411 and the first eNB 421. In the same manner, with respect to the second UE 412, the PGW 450 receives a modify bearer request in the NAS service request procedure between the PGW 450 and the second UE 412 and stores the correspondence between the second UE 412 and the second eNB 422.

Thus, by utilizing the NAS service request procedure, the PGW 450 can store the correspondence between the first UE 411 and the first eNB 421 and the correspondence between the second UE 412 and the second eNB 422, similar to the example depicted in FIG. 11.

In this case, the PGW 450 may not store the correspondence between the first UE 411 and the first eNB 421 and the correspondence between the second UE 412 and the second eNB 422, in the NAS initial attach procedure at step S1201.

The PGW 450 may store, for one of the UEs (the first UE 411 and the second UE 412), correspondence between the one UE and a base station in the NAS initial attach procedure, whereas the PGW 450 may store, for the other of the UEs, correspondence between the other UE and a base station in the NAS service request procedure.

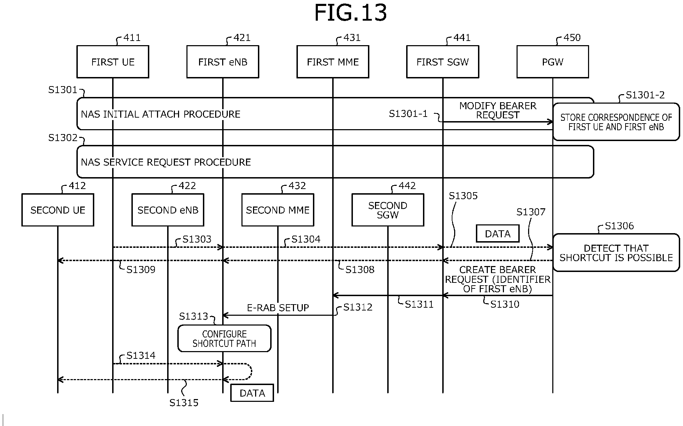

FIG. 13 is a sequence diagram depicting a further example of processing in the wireless communications system according to the third embodiment. In the wireless communications system 400 according to the third embodiment, steps depicted in FIG. 13, for example, may be executed. In FIG. 13, a case will be described where the first UE 411 and the second UE 412 are both connected to the first eNB 421.

Steps S1301 to S1306 depicted in FIG. 13 are similar to steps S1101 to S1106 depicted in FIG. 11. Subsequent to step S1306, the PGW 450 sends data received at step S1305 to the first GW 441 (step S1307). The sequence of steps S1306 and S1307 may be interchanged.

Next, the first SGW 441 transmits the data received at step S1307 to the first eNB 421 (step S1308). Next, the first eNB 421 transmits the data received at step S1308 to the second UE 412 (step S1309). Consequently, the data sent from the first UE 411 at step 1303 is received by the second UE 412.

Steps S1310 to S1313 depicted in FIG. 13 are similar to steps S1110 to S1113 depicted in FIG. 11. Note that the PGW 450 stores to the create bearer request transmitted at step S1310, an identifier of the first eNB 421 as a shortcut point to thereby notify the first SGW 441 of the identifier of the first eNB 421.

The E-RAB setup transmitted at step S1312 acts as a control signal instructing the first eNB 421 to change the delivery destination of the data to the first eNB 421, i.e. to perform a shortcut at the first eNB 421. At step S1313, the first eNB 421 configures a shortcut path so that data from the first UE 411 is transmitted directly to the second eNB 422 subordinate to the first eNB 421.

Consequently, when the first UE 411 transmits data destined for the second UE 412, the data is transmitted as described below through the shortcut path configured at step S1313. For example, first, the first UE 411 transmits to the first eNB 421, data destined for the second UE 412 (step S1314). Next, the first eNB 421 shortcuts the data received at step S1314, transmitting the data to the second UE 412 (step S1315).

In the example depicted in FIG. 13, a base station as an access point of each of the UEs (the first UE 411 and the second UE 412) may be identified in the NAS service request procedure, as depicted in FIG. 12, for example.

In FIGs. 11 to 13, a case has been described in which data is sent from the first UE 411 to the second UE 412. In a case of transmitting data from the second UE 412 to the first UE 411 as well, a shortcut path is also configured for the data from the second UE 412 to the first UE 411, similarly to the data from the first UE 411 to the second UE 412. Thus, bidirectional communication through a shortcut path becomes possible.

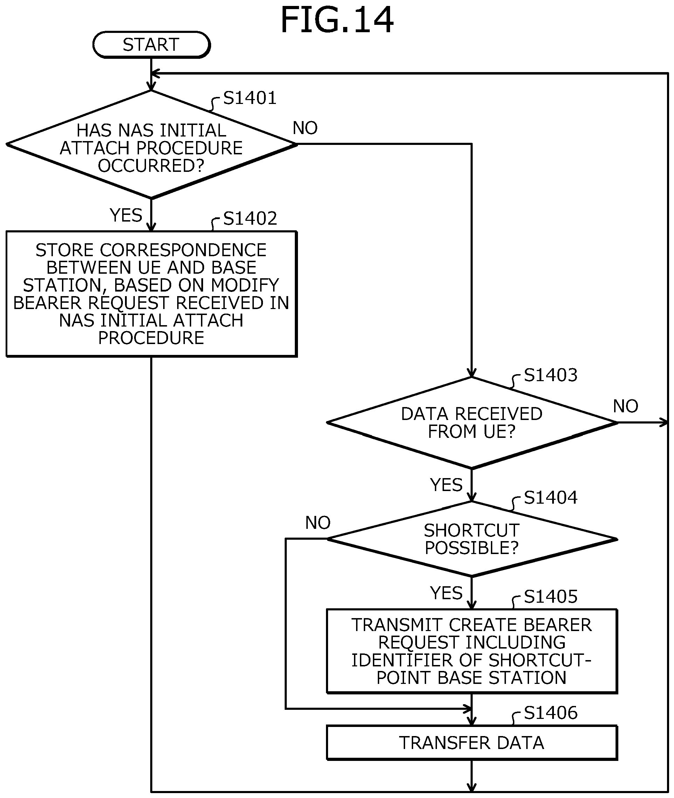

FIG. 14 is a flowchart depicting an example of processing by a PGW according to the third embodiment. The PGW 450 according to the third embodiment executes steps depicted in FIG. 14, for example. In FIG. 14, as depicted in FIGs. 11 and 13, processing of the PGW 450 will be described for a case where the PGW 450 stores correspondence between the first UE 411 and the first eNB 421 and correspondence between the second UE 412 and the second eNB 422, by utilizing the NAS initial attach procedure.

First, the PGW 450 determines whether a NAS initial attach procedure has occurred between the PGW 450 and a UE (e.g., the first UE 411) (step S1401). When a NAS initial attach procedure has occurred between the PGW 450 and the UE (step S1401: YES), the PGW 450 stores the correspondence between the UE and a base station, based on a modify bearer request received from the UE in the NAS initial attach procedure (step S1402), and returns to step S1401.

At step S1401, if a NAS initial attach procedure has not occurred between the PGW 450 and the UE (step S1401: NO), the PGW 450 determines whether data from a UE (e.g., the first UE 411) has been received (step S1403). If the PGW 450 has not received data from the UE (step S1403: NO), the PGW 450 returns to step S1401.

At step S1403, if the PGW 450 has received data from a UE (step S1403: YES), the PGW 450 determines whether the data from the UE receiving the data can be shortcut (step S1404). Determination at step S1404 can be performed by identifying the base station stored in association at step S1402, for each of a source UE of the received data and a destination UE of the received data.

At step S1404, if the data cannot be shortcut (step S1404: NO), the PGW 450 transitions to step S1406. If the data can be shortcut (step S1404: YES), the PGW 450 issues a create bearer request including an identifier of a shortcut point base station (e.g., the second eNB 422) (step S1405). For example, the PGW 450 transmits a create bearer request to the MME (e.g., the first MME 431) controlling a bearer of the received data.

Next, the PGW 450 transfers the received data toward a destination of the data (step S1406), and returns to step S1401. In the example depicted in FIG. 14, processing has been described where it is determined whether shortcut is possible each time data from a UE is received. On the contrary, if the received data is not a first packet, the PGW 450 may transition to step S1406 without executing steps S1404 and S1405. Consequently, whether shortcut is possible is determined only with respect to the first packet subsequent to the NAS service request procedure and, when shortcut is not possible, the determination of whether the shortcut is possible is omitted for subsequent packets and the processing amount can be reduced.

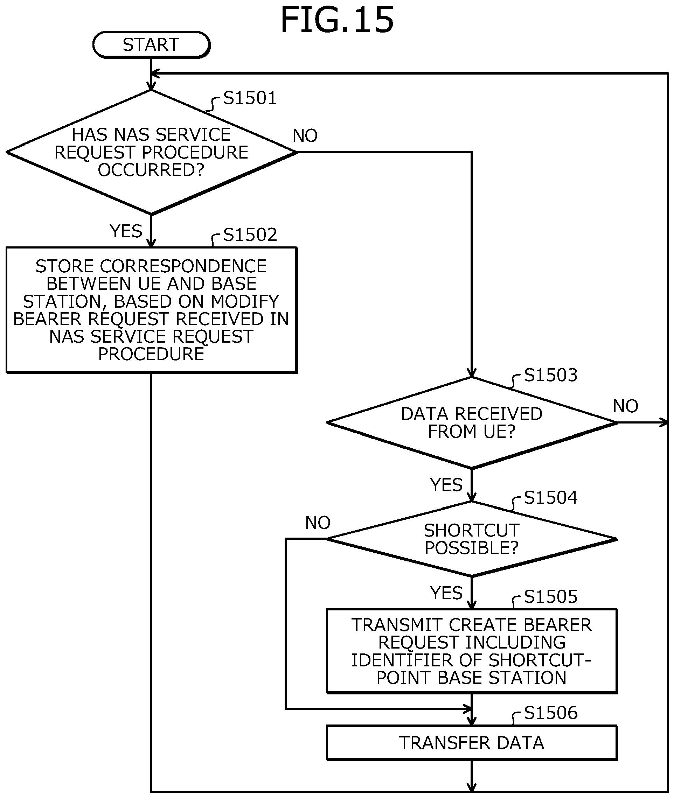

FIG. 15 is a flowchart depicting another example of processing by the PGW according to the third embodiment. The PGW 450 according to the third embodiment may execute steps depicted in FIG. 15, for example. In FIG. 15, processing of the PGW 450 will be described where the PGW 450 stores correspondence between the first UE 411 and the first eNB 421 and correspondence between the second UE 412 and the second eNB 422 by utilizing the NAS service request procedure, as depicted in FIG. 12.

First, the PGW 450 determines whether a NAS service request procedure has occurred between the PGW 450 and an UE (e.g., the first UE 411) (step S1501). If the NAS service request procedure has occurred between the PGW 450 and a UE (step S1501: YES), the PGW 450 stores correspondence between the UE and a base station, based on a modify bearer request received from the UE in the NAS service request procedure (step S1502), and returns to step S1501.

At step S1501, if a NAS service request procedure has not occurred between the PGW 450 and the UE (step S1501: NO), the PGW 450 transitions to step S1503. Steps S1503 to S1506 depicted in FIG. 15 are similar to steps S1403 to S1406 depicted in FIG. 14.

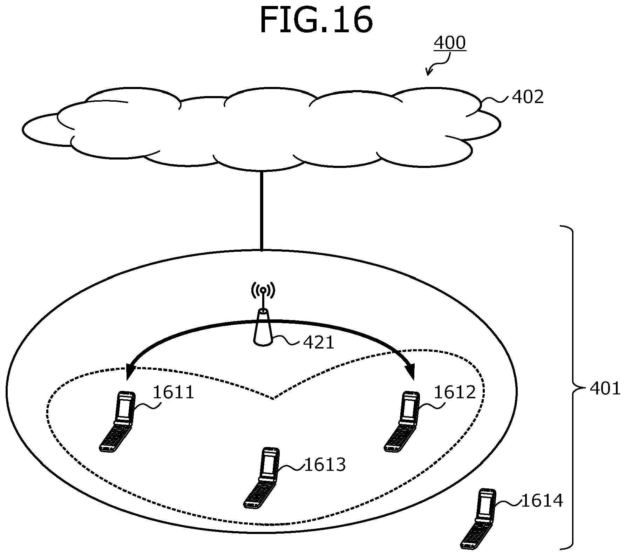

FIG. 16 is a diagram depicting an example of communication between terminals by eICBD applicable to the wireless communications system according to the third embodiment. In FIG. 16, parts similar to those depicted in FIG. 4 are given the same reference numerals used in FIG. 4 and explanations thereof will be omitted. UEs depicted in FIG. 16 are terminals corresponding to the first UE 411 and the second UE 412. The UEs 1611 to 1613 are UEs located within a cell of the first eNB 421. The UE 1614 is a UE located within a cell of an eNB (e.g., the second eNB 422 depicted in FIG. 4) different from the first eNB 421.

In the example depicted in FIG. 16, the UEs 1611 and 1612 communicate with each other by a path shortcut at the first eNB 421 and not passing through the packet core network 402. In other words, each of the UEs 1611 and 1612 performs wireless communication with the first eNB 421, for communication via the first eNB 421.

Since the UEs 1611 and 1612 can thus communicate with each other by a path not passing through the packet core network 402, the traffic flow of the packet core network 402 can be reduced. In the example depicted in FIG. 16, an example (e.g., corresponding to FIG. 13) of eICBD through a single eNB (the first eNB 421) is been described. In contrast, eICBD through plural eNBs (e.g. the first eNB 421 and the second eNB 422) may be carried out. The eICBD (e.g., corresponding to FIGs. 11 and 12) may be performed by a path passing through the packet core network 402, like a path shortcut at the first SGW 441 or the second SGW 442, for example.

In this manner, according to the third embodiment, the PGW 450 can obtain correspondence information concerning the first UE 411 and the access point thereof (e.g., the first eNB 421) by utilizing the NAS initial attach procedure or the NAS service request procedure of configuring a bearer of the first UE 411. The PGW 450 can obtain correspondence information concerning the second UE 412 and the access point thereof (e.g., the second eNB 422) by utilizing the NAS initial attach procedure or the NAS service request procedure of configuring a bearer of the second UE 412.

Based on the obtained correspondence information, when configuring a shortcut path, the PGW 450 can transmit an identifier of a shortcut point (delivery destination) by utilizing a create bearer request requesting generation of a bearer. This enables a shortcut path shortcut at an eNB (e.g., the first eNB 421) to be configured efficiently between the first UE 411 and the second UE 412.

### (Fourth Embodiment)

Parts of the fourth embodiment different from those of the third embodiment will be described. Although a case of configuring a path shortcut at a base station (e.g., the first eNB 421) has been described in the third embodiment, a case of configuring a path shortcut at an SGW (e.g., the first SGW 441) will be described in the fourth embodiment. The fourth embodiment can be carried out combined with parts common to those of the first to third embodiments.

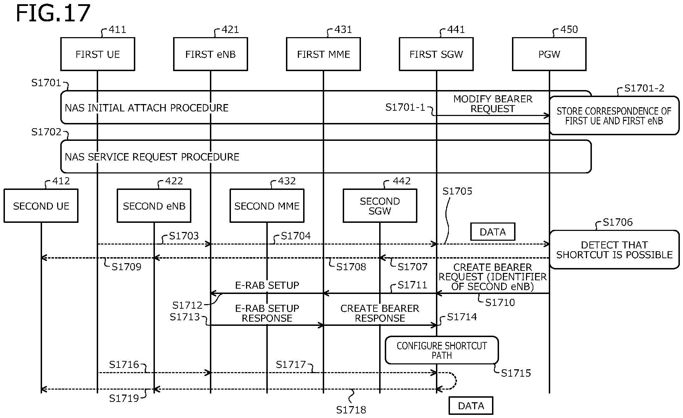

FIG. 17 is a sequence diagram depicting an example of processing in a wireless communications system according to the fourth embodiment. Although a case of shortcut at the first eNB 421 has been described in FIGs. 11 to 13, for example, a case of shortcut at the first SGW 441 will be described in FIG. 17.

Steps S1701 to S1712 depicted in FIG. 17 are similar to steps 1101 to 1112 depicted in FIG. 11. It is to be noted, however, that at step S1706, the PGW 450 detects that data from the first UE 411 to the second UE 412 can be shortcut at the first SGW 441.

For example, the first UE 411 connects to the first eNB 421 and the second UE 412 connects to the second eNB 422. The first eNB 421 and the second eNB 422 are both base stations subordinate to the PGW 450 and can communicate with each other via the first SGW 441. As a result, the PGW 450 can determine that the data from the first UE 411 to the second UE 412 can be shortcut at the first SGW 441.

Subsequent to step S1712, the first eNB 421 transmits to the first MME 431, an E-RAB setup response as a response signal to the E-RAB setup received at step S1712 (step S1713). The first eNB 421 stores to the E-RAB setup response transmitted at step S1713, the identifier of the second eNB 422 included in the E-RAB setup received at step S1712.

The E-RAB setup response transmitted at step S1713 is defined as "E-RAB Setup Response" in TS36.413 of 3GPP, for example. On the other hand, in 5.4.1 (Dedicated bearer activation) of TS23.401 of 3GPP, the E-RAB setup response is defined as "Bearer Setup Response". The format of the control signal sent at step S1713 is not limited hereto.

Next, the first MME 431 transmits to the first SGW 441, a create bearer response as a response signal to the create bearer request received at step S1711 (step S1714). The first MME 431 stores to the create bearer response sent at step S1714, the identifier of the second eNB 422 included in the E-RAB setup response received at step S1713.

The create bearer response transmitted at step S1714 can be "Create Bearer Response" defined in 5.4.1 (Dedicated bearer activation) of TS23.401 of 3GPP, for example. The format of the signal sent at step S1714 is not limited hereto.

Next, the first SGW 441 configures a shortcut path shortcutting data from the first UE 411 to the second UE 412 at the first SGW 441 (step S1715). For example, the first SGW 441 changes the delivery destination of the data from the first UE 411 to the second SGW 442, based on the identifier of the second eNB 422 included in the create bearer response received at step S1714.

This allows data to be transmitted by the shortcut path configured at step S1715 as described below, when the first UE 411 transmits data destined for the second UE 412. For example, first, the first UE 411 transmits data destined for the second UE 412 to the first eNB 421 (step S1716).

Next, the first eNB 421 transmits the data received at step S1716 to the first SGW 441 (step S1717). Next, the first SGW 441 shortcuts data received at step S1711, transmitting the data to the second eNB 422 (step S1718). Next, the second eNB 422 transmits the data received at step S1718 to the second UE 412 (step S1719).

At step S1718, for example, data transmission from the first SGW 441 to the second eNB 422 is performed via an interface between the first SGW 441 and the second eNB 422. This interface may be a physical interface directly connecting the first SGW 441 and the second eNB 422, or may be a logical interface connecting the first SGW 441 and the second eNB 422 by way of another device.

The PGW 450 may store to the create bearer request transmitted at step S1710, control information specifying that data from the first UE 411 to the second UE 412 is shortcut at the first SGW 441 . This enables the first eNB 421, the first MME 431, and the first SGW 441, for example, to configure a shortcut path shortcut at the first SGW 441, as opposed to being shortcut at a base station (e.g., the first eNB 421).

The method of storing to the create bearer request, the control information specifying that the data from the first UE 411 to the second UE 412 is shortcut at the first SGW 441 is not particularly limited. For example, the first eNB 421 may autonomously determine whether to shortcut the data at the first eNB 421 or to shortcut the data at an SGW described later, based on connection relationships related to the first UE 411 and the second UE 412.

In the processing depicted in FIG. 17, correspondences between the UEs and the eNBs may be stored by utilizing the NAS service request procedure, as depicted in FIG. 12, for example. The processing depicted in FIG. 17 may be performed with respect to both the first UE 411 and the second UE 412 being connected to the first eNB 421, as depicted in FIG. 13, for example.

The processing by the PGW 450 according to the fourth embodiment is similar to the processing depicted in FIGs. 14 and 15, for example.

In this manner, in the case of shortcut at the first SGW 441, the first SGW 441 can be notified of the identifier of the second eNB 422 as a shortcut point, by using signals transmitted and received in the individual bearer activation for configuring individual bearers, for example. The individual bearer is a bearer additionally set for a default bearer. The signals transmitted and received in the individual bearer activation are the create bearer request, the E-RAB setup, E-RAB setup response, and the create bearer response, in the example depicted in FIG. 17, but are not limited hereto.

Configurations of the first eNB 421 and the second eNB 422 according to the fourth embodiment are similar to the configurations depicted in FIGs. 5 and 8, for example. Configurations of the first UE 411 and the second UE 412 according to the fourth embodiment are similar to the configurations depicted in FIGs. 6 and 9, for example. A configuration of the PGW 450 according to the fourth embodiment is similar to the configurations depicted in FIGs. 7 and 10, for example.

In this manner, according to the fourth embodiment, the PGW 450 can obtain correspondence information concerning the first UE 411 and the access point thereof (e.g., the first eNB 421), by utilizing the NAS initial attach procedure or the NAS service request procedure of configuring a bearer of the first UE 411. The PGW 450 can obtain correspondence information concerning the second UE 412 and the access point there of (e.g., the second eNB 422), by utilizing the NAS initial attach procedure or the NAS service request procedure of configuring a bearer of the second UE 412.

In the case of configuring a shortcut path on the basis of the obtained correspondence information, the PGW 450 can transmit the identifier of a shortcut point (delivery destination) by utilizing the create bearer request requesting generation of a bearer. This enables a shortcut path shortcut at an SGW (e.g., the first SGW 441) to be configured efficiently between the first UE 411 and the second UE 412.

### (Fifth Embodiment)

A fifth embodiment will be described in terms of parts differing from the fourth embodiment. In the fourth embodiment, a case of configuring a path shortcut at an SGW (e.g., the first SGW 441) corresponding to a source terminal (e.g., the first UE 411) has been described. In contrast, in the fifth embodiment, a case of changing the shortcut point from the SGW corresponding to the source terminal to an SGW (e.g., the second SGW 442) corresponding to a destination terminal will be described. The fifth embodiment can be carried out combined with parts common to those of the first to fourth embodiments.

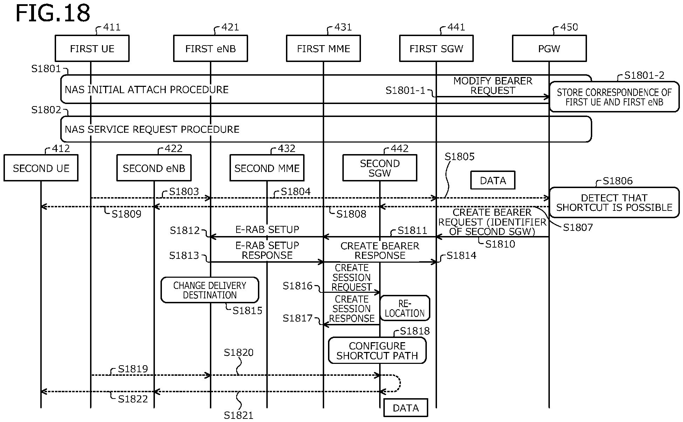

FIG. 18 is a sequence diagram depicting an example of processing in a wireless communications system according to the fifth embodiment. Although a case of configuring a path shortcut at the first SGW 441 has been described in FIG. 17, for example, a case of changing the shortcut point from the first SGW 441 to the second SGW 442 will be described in FIG. 18.

Steps S1801 to S1814 depicted in FIG. 18 are similar to steps S1701 to S1714 depicted in FIG. 17. It is to be noted, however, that at step S1810 the PGW 450 stores to a create bearer request to be transmitted, the identifier of the second SGW 442 as an identifier of the changed shortcut point. As a result, the first MME 431 can be notified of the identifier of the second SGW 442 as the shortcut point.

At step S1812, the first MME 431 transmits to the first eNB 421, an E-RAB setup including the notified identifier of the second SGW 442 and instructing the changing of the SGW of the first UE 411 to the second SGW 442.

Based on the identifier of the second SGW 442 included in the E-RAB setup received at step S1812, the first eNB 421 changes the delivery destination of data from the first UE 411 from the first SGW 441 to the second SGW 442 (step S1815). The sequence of the steps S1813 and S1815 may be interchanged.

When receiving the E-RAB setup response at step S1813, the first MME 431 transmits to the second SGW 442, a create session request requesting the second SGW 442 to generate a session (step S1816). The sequence of steps S1814 and S1816 may be interchanged.

The create session request transmitted at step S1816 can be "Create Session Request" defined in 5.5.1.1.3 (X2-based handover with Serving GW relocation) of TS23.401 of 3GPP, for example, but is not limited hereto. The first MME 431 triggers relocation at step S1816 by newly creating a default bearer (default call) and by transferring information such as a bearer (individual call) of a shortcut path to the second SGW 442. This changes the SGW of the first UE 411 from the first SGW 441 to the second SGW 442.

Next, the second SGW 442 transmits to the first MME 431, a create session response to the create session request received at step S1816 (step S1817). The create session response transmitted at step S1817 can be "Create Session Response" defined in 5.5.1.1.3 (X2-based handover with Serving GW relocation) of TS23.401 of 3GPP, for example, but is not limited hereto.

The second SGW 442 configures a shortcut path shortcutting data from the first UE 411 to the second UE 412 at the second SGW 442 (step S1818). For example, the second SGW 442 sets the delivery destination of data from the first UE 411, to the second eNB 422. The second SGW 442 can obtain the identifier of the second eNB 422 as a delivery destination of data, from information transferred at step S1816, for example. It is to be noted, however, that the method of obtaining the identifier of the second eNB 422 by the second SGW 442 is not limited hereto.

Consequently, when the first UE 411 transmits data destined for the second UE 412, the data is transmitted via the shortcut path configured at step S1818 as described below. For example, first, the first UE 411 transmits the data destined for the second UE 412, to the first eNB 421 (step S1820). Next, the first eNB 421 transmits the data received at step S1819 to the second SGW 442 (step S1820).

Next, the second SGW 442 shortcuts data received at step S1820, transmitting the data to the second eNB 422 (step S1821). Next, the second eNB 422 transmits the data received at step S1821 to the second UE 412 (step S1822).

The PGW 450 may store to the create bearer request transmitted at step S1810, control information specifying that the shortcut point of the data from the first UE 411 to the second UE 412 is changed from the first SGW 441 to the second SGW 442. This enables the first eNB 421, the first MME 431, and the first SGW 441, for example, to configure a shortcut path shortcut at the second SGW 442, as opposed to being shortcut at the first SGW 441 depicted in FIG. 17, for example.

The method of storing to the create bearer request, control information specifying that the shortcut point of the data from the first UE 411 to the second UE 412 is changed from the first SGW 441 to the second SGW 442 is nor particularly limited. For example, the first eNB 421, the first MME 431, and the first SGW 441 may autonomously determine whether to shortcut at the first SGW 441 or to shortcut at the second SGW 442, based on connection relationships related to the first UE 411 and the second UE 412.

In the processing depicted in FIG. 18, correspondences between the UEs and the eNBs may be stored by utilizing the NAS service request procedure, as depicted in FIG. 12, for example. The processing depicted in FIG. 18 may be performed with the first UE 411 and the second UE 412 both being connected to the first eNB 421, as depicted in FIG. 13, for example.

In the example depicted in FIG. 18, although a case has been described where the shortcut point is immediately changed from the first SGW 441 to the second SGW 442 so that communication via the path shortcut at the first SGW 441 cannot be performed, such processing is not limited hereto. For example, communication via the path shortcut at the first SGW 441 depicted in FIG. 17 is first performed, after which switching may be made to communication via the path shortcut at the second SGW 442 depicted in FIG. 18.

For example, depending on circumstances, the PGW 450 may perform switching between communication via the path shortcut at the first SGW 441 depicted in FIG. 17 and communication via the path shortcut at the second SGW 442 depicted in FIG. 18. For example, the PGW 450 may perform switching between the communications, based on a result of comparison between load states of the first SGW 441 and the second SGW 442. The load states of the SGWs (the first SGW 441 and the second SGW 442) can be, for example, various load states such as the number of bearers configured for each SGW and usage rate of hardware resources (e.g., CPU or memory) of each SGW.

Alternatively, the PGW 450 may perform switching between the communications, based on a result of comparison of transmission delay between the path shortcut at the first SGW 441 and the path shortcut at the second SGW 442. For example, the physical transmission distance of the paths or the result of measurement of delay time in the paths may be used as the transmission delay of the paths. Alternatively, the PGW 450 may perform switching between the communications, depending on other various types of circumstances.

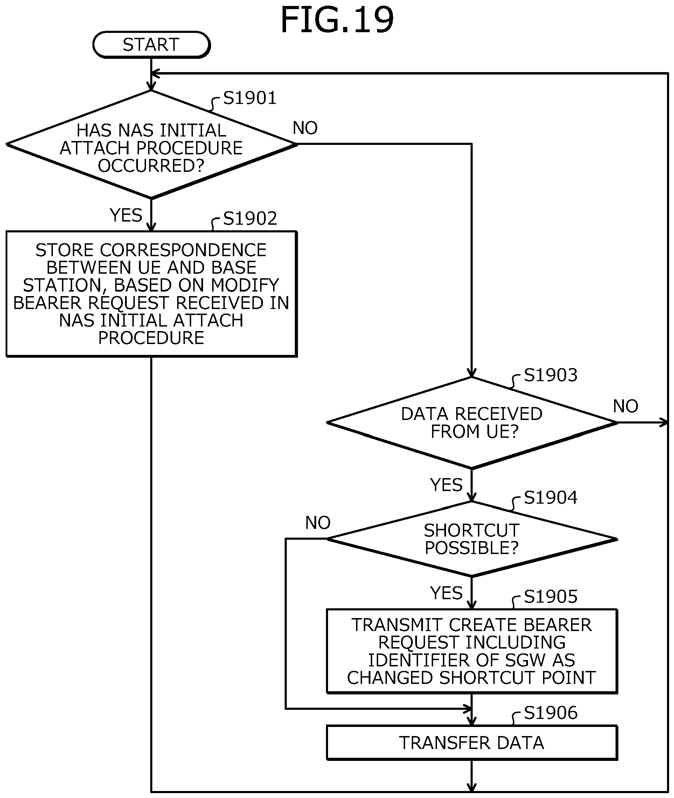

FIG. 19 is a flowchart depicting an example of processing by a PGW according to the fifth embodiment. The PGW 450 according to the fifth embodiment executes steps depicted in FIG. 19, for example. In FIG. 19, processing of the PGW 450 will be described in a case of storing correspondence between the first UE 411 and the first eNB 421 and correspondence between the second UE 412 and the second eNB 422, by utilizing the NAS initial attach procedure, as depicted in FIGs. 11 and 13.

Steps S1901 to S1906 depicted in FIG. 19 are similar to steps S1401 to S1406 depicted in FIG. 14. It is to be noted, however, that the PGW 450 transmits a create bearer request that includes the identifier of an SGW (e.g., the second SGW 442) as a changed shortcut point, at step S1905.

The PGW 450 according to the fifth embodiment may store correspondence between the UE and a base station, based on a modify bearer request received from the UE in the NAS service request procedure, as depicted in FIG. 15, for example.

Configurations of the first eNB 421 and the second eNB 422 according to the fifth embodiment are similar to the configurations depicted in FIGs. 5 and 8, for example. Configurations of the first UE 411 and the second UE 412 according to the fifth embodiment are similar to the configurations depicted in FIGs. 6 and 9, for example. A configuration of the PGW 450 according to the fifth embodiment is similar to the configurations depicted in FIGs. 7 and 10, for example.

In this manner, according to the fifth embodiment, when the shortcut point is changed from the first SGW 441 to the second SGW 442, information instructing to switch the SGW shortcutting data from the first UE 411 can be stored to a create bearer request and transmitted. Thus, it becomes possible to efficiently configure a shortcut path after a change of the SGW as a shortcut point.

The SGW shortcutting data from the first UE 411 toward the second UE 412 can be changed to the second SGW 442 different from the first SGW 441 set for the first UE 411 by the NAS initial attach procedure, for example. Thus, it becomes possible to configure the shortcut path more flexibly.

### (Sixth Embodiment)

The first to fifth embodiments above can be implemented in combinations. An example of combinations of the first to fifth embodiments will be described as a sixth embodiment.

For example, depending on circumstances, switching may be made between communication by a path shortcut at a base station as in the third embodiment and communication by a path shortcut at an SGW as in the fourth and fifth embodiments. For example, the PGW 450 may switch the communications, based on a result of comparison of the transmission delays between the path shortcut at the base station and the path shortcut at the SGW. The physical transmission distance of the paths or a result of measurement of delay time in the paths can be used as the transmission delay of the paths. Alternatively, the PGW 450 may perform switching between the communications, depending on other various types of circumstances.

Alternatively, for example, communication by a path shortcut at a base station may be used for communication from the first UE 411 to the second UE 412, whereas communication by a path shortcut at an SGW may be used for communication from the second UE 412 to the first UE 411.

Depending on circumstances, switching may be made between communication by a path shortcut at an SGW corresponding to a source terminal as in the fourth embodiment and communication by a path whose shortcut point is changed from the SGW corresponding to the source terminal to an SGW corresponding to a destination terminal as in the fifth embodiment. For example, the PGW 450 may switch the communications, based on a result of comparison of the transmission delays between the path shortcut at the SGW corresponding to the source terminal and the path whose shortcut point is changed from the SGW corresponding to the source terminal to the SGW corresponding to the destination terminal. The physical transmission distance of the paths or a result of measurement of delay time in the paths can be used as the transmission delay of the paths. Alternatively, the PGW 450 may switch the communications, based on a result of comparison between load states of the SGWs (the first SGW 441 and the second SGW 442). Alternatively, the PGW 450 may switch the communications, depending on other various types of circumstances.

For example, communication by a path shortcut at an SGW corresponding to a source terminal may be used for communication from the first UE 411 to the second UE 412, whereas communication by a path with a changed shortcut point may be used for communication from the second UE 412 to the first UE 411.

As set forth hereinabove, according to the wireless communications system, the communications apparatus, the terminal, and the base station efficient in controlling configuration of a shortcut communication path can be provided.

For example, a method is also conceivable that identifies geographical proximity between terminals by utilizing ProSe so that communication between terminals by a shortcut path is executed based on the geographical proximity. This method, however, cannot cause a terminal that does not implement ProSe to execute shortcut communication. The base station is also required to be equipped with a ProSe layer.

On the contrary, according to the above embodiments, even if the terminal or the base station does not implement ProSe, a shortcut path can be configured efficiently and shortcut communication can be executed between terminals. Accordingly, the load in the packet core network, etc. can be reduced and delays in communication between terminals can be reduced.

### EXPLANATIONS OF LETTERS OR NUMERALS

100, 400 wireless communications system
101 network
110A first terminal
110B second terminal
111, 121, 131, 540, 730 communications unit
112, 122, 132, 520, 620, 710 control unit
120, 500, 800 base station
120A first base station
120B second base station
130 communications apparatus
401 wireless access network
402 packet core network
411 first UE
412 second UE
421 first eNB
422 second eNB
431 first MME
432 second MME
441 first SGW
442 second SGW
450 PGW
510, 610 wireless communications unit
511, 611 wireless transmitting unit
512, 612 wireless receiving unit
530, 630, 720 storage unit
600, 900 terminal
700, 1000 gateway
811, 911 antenna
812, 912 RF circuit
813, 913, 1011 processor
814, 914, 1012 memory
815, 1013 network IF
1611 to 1614 UE

## Claims

1. A wireless communications system comprising:
a plurality of terminals;
one or more base stations to which the plurality of terminals are connected; and
a communications apparatus having a communications unit and a control unit, for each of the plurality of terminals, in a procedure where a target terminal which is one of the each of the plurality of terminals receives a service from a network the communications unit configured to receive a signal which requests establishment of a bearer between the target terminal and the communications apparatus, the signal including information enabling identification of a base station to which the target terminal is connected, and the control unit configured to control configuring a path used for data transmission and reception between the plurality of terminals, the path including a case of bypassing the communications apparatus while passing through the one or more base stations to which the plurality of terminals are connected.

2. The wireless communications system according to claim 1, wherein
the communications apparatus is configured to identify the base station to which the target terminal is connected, based on an identifier of the base station to which the target terminal is connected, included in the received signal requesting configuration of a bearer.

3. The wireless communications system according to claim 1 or 2, wherein
the communications apparatus transmits control information for configuring the path, stored to a signal requesting configuration of an individual bearer for a first terminal among the plurality of terminals.

4. The wireless communications system according to claim 3, wherein
the control information for configuring the path includes an identifier of a delivery destination to which data from the first terminal is to be delivered by an apparatus between the communications apparatus and the first terminal.

5. The wireless communications system according to claim 3, wherein
the path includes a plurality of gateways configured to transmit the data from the first terminal to a second terminal different from the first terminal among the plurality of terminals, and
the control information for configuring the path includes information instructing to switch a gateway that is among the plurality of gateways and, transmits and receives the data from the first terminal.

6. The wireless communications system according to any one of claims 1 to 5, wherein
at least one of the plurality of terminals transmits to the communications apparatus in the procedure for the target terminal to receive a service from a network, a signal requesting communication via the path, and
the communications apparatus provides control of configuring the path, based on the signal requesting communication via the path.

7. The wireless communications system according to any one of claims 1 to 6, wherein
the procedure for the target terminal to receive a service from a network is one of an initial attach procedure of a non-access layer and a service request procedure of a non-access layer.

8. A communications apparatus comprising:
a communications unit configured to receive a signal for each of the plurality of terminals, in a procedure where a target terminal which is one of the each of the plurality of terminals receives a service from a network, the communications unit configured to receive a signal which requests establishment of a bearer between the target terminal and the communications apparatus, the signal including information enabling identification of a base station to which the target terminal is connected; and
a control unit configured to control configuring a path used for data transmission and reception between the plurality of terminals, the path including a case of bypassing the communications apparatus while passing through the one or more base stations to which the plurality of terminals are connected.

9. A terminal comprising:
a communications unit configured to communicate with a communications apparatus by way of a base station to which the terminal is connected, the communications apparatus receiving a signal in a procedure where a target terminal which is one of the each of the plurality of terminals receives a service from a network, the signal requesting establishment of a bearer between the target terminal and the communications apparatus, the signal including information enabling identification of a base station to which the target terminal is connected, wherein
the communications unit transmits and receives data with respect to a second terminal by a path configured between the terminal and the second terminal under control of the communications apparatus, the path including a case of passing through one or more base stations to which the terminal and the second terminal are connected while bypassing the communications apparatus.

10. A base station comprising:
a communications unit configured to communicate with a communications apparatus and with a terminal connected to the base station, the communications apparatus receiving a signal in a procedure where a target terminal which is one of the each of the plurality of terminals receives a service from a network, the communications unit configured to receive a signal which requests establishment of a bearer between the target terminal and the communications apparatus, the signal including information enabling identification of a base station to which the target terminal is connected; and
a control unit configured to control configuring a path used for data transmission and reception between the plurality of terminals, the path including a case of bypassing the communications apparatus while passing through the one or more base stations to which the plurality of terminals are connected.
